# EUROPEAN PATENT APPLICATION

(11) **EP 4 852 178 A1**
(43) Date of publication of application: **09.12.2026**
(21) Application number: 26181036.0
(22) Date of filing: 26.05.2026
(51) Int. Cl.: H01M 50/249, B64U 50/39

(54) **LOCKING MECHANISM AND UNMANNED AERIAL VEHICLE**

(30) Priority: 06.06.2025 CN 202521157761 U
(71) Applicant: Autel Robotics Co., Ltd., Shenzhen, Guangdong 518000 (CN)
(72) Inventor: HAO, Liang, Shenzhen, Guangdong, 518000 (CN); HUANG, Chang, Shenzhen, Guangdong, 518000 (CN)
(74) Representative: Gulde & Partner

(57) **Abstract**

A locking mechanism and an unmanned aerial vehicle (UAV) are disclosed. The locking mechanism includes a first locking member, a second locking member, a limiting member, and an elastic member. The first locking member is provided with a first locking slot and a second locking slot spaced apart along a first direction. The elastic member is connected to the second locking member and the limiting member. The limiting member is configured to be limited in the first locking slot or the second locking slot. The first locking member is slidable relative to the second locking member along the first direction to switch the limiting member between the first locking slot and the second locking slot. The second locking member is configured to be fitted to a first device and lock a second device. When the limiting member is located in the second locking slot, the first locking member abuts against the first device to limit movement of the second locking member, thereby achieving double locking and reducing a failure risk of the locking mechanism.

## Description

### TECHNICAL FIELD

Embodiments of the present application relate to the field of locking mechanism technologies, and in particular, to a locking mechanism and an unmanned aerial vehicle (UAV).

### BACKGROUND

A locking mechanism is an apparatus for fixedly connecting two devices. For example, the locking mechanism can tightly lock a first device and a second device. Specifically, the locking mechanism may be integrated into the first device or the second device, or the locking mechanism may exist independently of the first device and the second device.

During practical application, for example, when the locking mechanism is applied to an unmanned aerial vehicle (UAV), the locking mechanism may be configured to fix a connection between a battery pack and a fuselage housing of the UAV. This design facilitates quick dismounting and mounting of the battery pack, thereby achieving quick battery replacement and effectively improving endurance of the UAV.

During implementation of the present application, the applicant of the present application found that, in the related art, the locking mechanism achieves locking of the first device and the second device by using a single locking mechanism. For example, the locking mechanism is fitted to the first device and is configured to lock the second device. The existing locking mechanism only has single locking and the locking mechanism has a high risk of failure.

### SUMMARY

In view of the above problems, embodiments of the present application provide a locking mechanism and an unmanned aerial vehicle (UAV), which overcome the above problems or at least partially resolve the above problems.

According to an aspect of embodiments of the present application, a locking mechanism is provided, including a first locking member, a second locking member, a limiting member and an elastic member. The first locking member is provided with a first locking slot and a second locking slot spaced apart along a first direction. One end of the elastic member is connected to the second locking member and an other end of the elastic member is connected to the limiting member. The limiting member is configured to be limited in the first locking slot or the second locking slot. The first locking member is slidable relative to the second locking member along the first direction, to switch the limiting member between the first locking slot and the second locking slot. The second locking member is configured to be fitted to a first device and lock a second device. When the limiting member is located in the second locking slot, the first locking member is configured to abut against the first device, to limit movement of the second locking member. When the limiting member is located in the first locking slot, the first locking member releases the movement of the second locking member from limiting.

In an optional implementation, a spacing portion is provided between the first locking slot and the second locking slot. The spacing portion has a first inclined surface facing the first locking slot and a second inclined surface facing the second locking slot. The limiting member has a third inclined surface and a fourth inclined surface. When the limiting member is located in the first locking slot, at least part of the third inclined surface abuts against the first inclined surface. When the limiting member is located in the second locking slot, at least part of the fourth inclined surface abuts against the second inclined surface.

In an optional implementation, the second locking member is provided with a sliding hole. The first locking member has a sliding portion extending into the sliding hole. The sliding portion is slidable relative to the sliding hole along the first direction.

In an optional implementation, the second locking member is provided with a fitting groove and an opening in communication with the fitting groove. One end of the elastic member is connected to a groove wall of the fitting groove. At least part of the limiting member is received in the fitting groove. One end of the limiting member facing away from the elastic member is configured to extend from the opening to be limited in the first locking slot or the second locking slot.

In an optional implementation, the limiting member abuts against the groove wall of the fitting groove along the first direction.

In an optional implementation, the limiting member includes a connecting portion, a first limiting portion and a second limiting portion. The connecting portion is connected to an other end of the elastic member. The first limiting portion is connected to the connecting portion. The first limiting portion is configured to extend from the opening to be limited in the first locking slot or the second locking slot. The second limiting portion is connected to the connecting portion along the first direction. The second limiting portion abuts against the groove wall of the fitting groove.

In an optional implementation, the first locking member includes a first pushing portion and a second pushing portion arranged opposite to each other along the first direction. The first pushing portion is configured to switch the limiting member from the second locking slot to the first locking slot. The second pushing portion is configured to cause the limiting member to switch from the first locking slot to the second locking slot.

In an optional implementation, the first locking member has a stop portion. The stop portion is configured to abut against the first device, to limit the movement of the second locking member.

In an optional implementation, the first locking member is superposed on the second locking member along a second direction. Two limiting members are provided. The two limiting members are arranged at an interval along a third direction. The first direction, the second direction and the third direction are perpendicular to each other two by two. Two elastic members are provided. One end of one of the elastic members is connected to the second locking member and an other end of the one of the elastic members is connected to one of the limiting members.

According to an aspect of embodiments of the present application, an unmanned aerial vehicle is provided, including a battery pack, a housing and the locking mechanism. The second locking member is fitted to the battery pack. The second locking member is configured to lock the second device. The first locking member is configured to abut against the battery pack.

The beneficial effects of embodiments of the present application are as follows. A locking mechanism is provided, including a first locking member, a second locking member, a limiting member and an elastic member. The first locking member is provided with a first locking slot and a second locking slot spaced apart along a first direction. One end of the elastic member is connected to the second locking member and an other end of the elastic member is connected to the limiting member. The limiting member is configured to be limited in the first locking slot or the second locking slot. The first locking member is slidable relative to the second locking member along the first direction, to switch the limiting member between the first locking slot and the second locking slot. The second locking member is configured to be fitted to a first device and lock a second device. When the limiting member is located in the second locking slot, the first locking member is configured to abut against the first device, to limit movement of the second locking member. When the limiting member is located in the first locking slot, the first locking member releases the movement of the second locking member from limiting. By using the locking mechanism, single locking of the first device and the second device can be achieved through the second locking member and limitation on the movement of the second locking member and unlocking of the second locking member by the first locking member can be achieved through the limiting member. Specifically, when the limiting member is located in the second locking slot, the first locking member is configured to abut against the first device, to limit movement of the second locking member. When the limiting member is located in the first locking slot, the first locking member partially disengages from the first device, so that the first locking member releases the second locking member from limiting. In this way, double locking can be achieved, a failure risk of the locking mechanism can be reduced and reliability of locking of the first device and the second device by the locking mechanism can be improved.

### BRIEF DESCRIPTION OF THE DRAWINGS

One or more embodiments are exemplarily described with reference to pictures in accompanying drawings corresponding to embodiments. The exemplary descriptions do not constitute a limitation on embodiments. Elements in the accompanying drawings that have same reference numerals are represented as similar elements. Unless otherwise particularly stated, the pictures in the accompanying drawings are not drawn to scale.
FIG. 1 is a schematic diagram of a first locking member and a second locking member in a locking mechanism according to an embodiment of the present application being in a locked state;
FIG. 2 is a schematic diagram of a first locking member and a second locking member in a locking mechanism according to an embodiment of the present application being in an unlocked state;
FIG. 3 is a schematic diagram of a locking mechanism according to an embodiment of the present application being locked to a second device;
FIG. 4 is a schematic diagram of a locking mechanism according to an embodiment of the present application being unlocked from a second device;
FIG. 5 is a schematic exploded view of a locking mechanism according to an embodiment of the present application;
FIG. 6 is a partial cross-sectional view taken along P in FIG. 3 according to an embodiment of the present application;
FIG. 7 is an enlarged schematic diagram of part A in FIG. 6 according to an embodiment of the present application;
FIG. 8 is a partial cross-sectional view taken along Q in FIG. 3 according to an embodiment of the present application;
FIG. 9 is a partial cross-sectional view taken along R in FIG. 4 according to an embodiment of the present application;
FIG. 10 is a schematic diagram of a second locking member according to an embodiment of the present application; and
FIG. 11 is a schematic diagram of a torsion spring fitted to a second locking member according to an embodiment of the present application.

The reference numerals in the accompanying drawings are as follows.
100: Locking mechanism; 200: First device; 300: Second device;
10: First locking member; 20: Second locking member; 30: Limiting member; 40: Elastic member; 50: Torsion spring; 60: Rotating shaft;
101: First locking slot; 102: Second locking slot; 103: Spacing portion; 1031: First inclined surface; 1032: Second inclined surface; 104: Sliding portion; 105: Stop portion; 106: First pushing portion; 107: Second pushing portion;
201: Sliding hole; 202: Fitting groove; 2021: Opening; 203: Receiving groove; 204: Mounting hole; 205: Accommodating groove;
21: Stopping portion; 22: Mounting portion; 23: Latch portion; 231: Inclined surface;
301: Third inclined surface; 302: Fourth inclined surface;
31: Connecting portion; 32: First limiting portion; 33: Second limiting portion;
51: Spring body; 52: End portion; 53: Torsion arm;
D1: First direction; D2: Second direction; D3: Third direction;
C1: First rotation direction; C2: Second rotation direction;
200a: Battery pack; 300a: Housing;
2001: Mounting groove; 2002: Step portion; 3001: Locking slot.

### DETAILED DESCRIPTION

For ease of understanding of the present application, the present application is described in more detail below with reference to the accompanying drawings and specific embodiments. It should be noted that, when an element is expressed as "being fixed to" another element, the element may be directly on the another element, or one or more intermediate elements may exist between the element and the another element. When one element is described to be "connected to" another element, the element may be directly connected to the another element, or one or more intermediate elements may exist therebetween. Terms "vertical", "horizontal", "left", "right", "inner", "outside" and similar expressions used in this specification are merely used for illustrative purposes.

Unless otherwise defined, meanings of all technical and scientific terms used in this specification are the same as that usually understood by a person skilled in the technical field to which the present application belongs. Terms used in the specification of the present application are merely intended to describe objectives of the specific embodiments, but are not intended to limit the present application. The term "and/or" used in this specification includes any or all combinations of one or more related listed items.

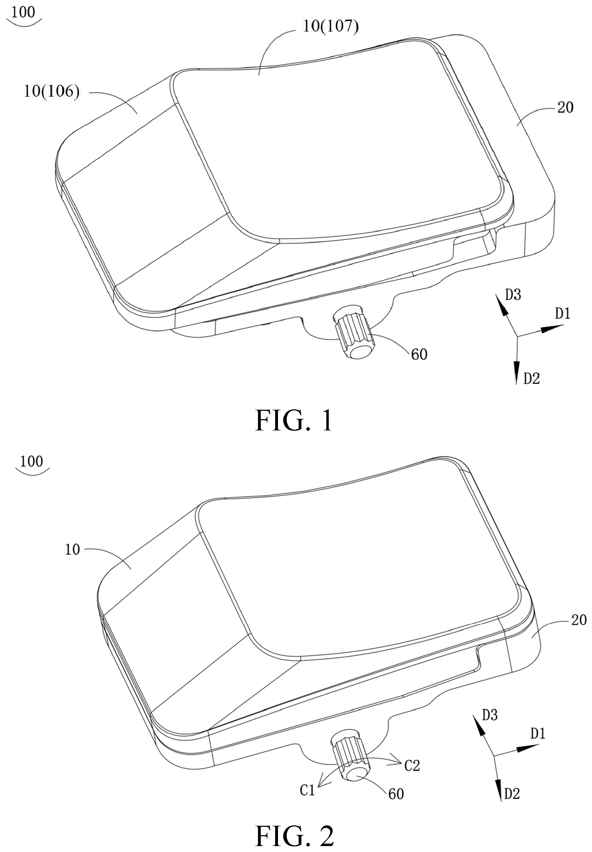

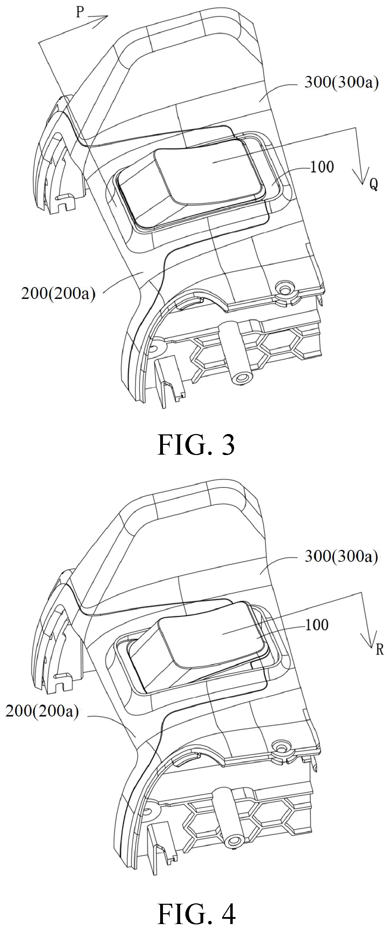

In order to facilitate understanding of the present application, refer to FIG. 1 and FIG. 2. FIG. 1 and FIG. 2 are schematic diagrams of a locking mechanism 100 being respectively in a locked state and an unlocked state according to an embodiment of the present application. A state in which the locking mechanism 100 locks or unlocks a second device 300 can be first generally understood according to FIG. 3 and FIG. 4.

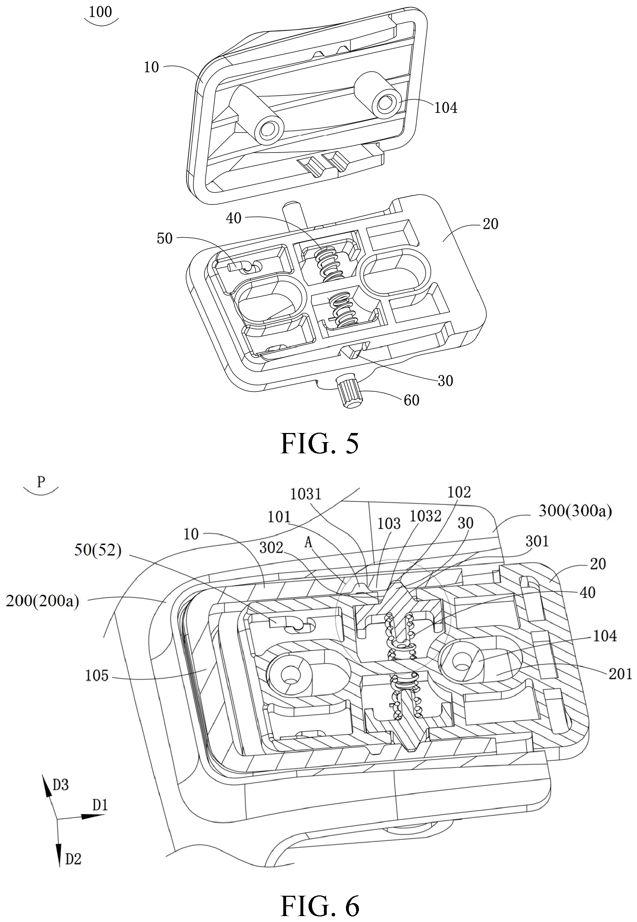

For the locking mechanism 100 provided in embodiments of the present application, refer to FIG. 5. The locking mechanism 100 includes a first locking member 10, a second locking member 20, a limiting member 30, an elastic member 40, a torsion spring 50 and a rotating shaft 60. The second locking member 20 is rotatably connected to an external first device 200 through the torsion spring 50 and the rotating shaft 60. The second locking member 20 is configured to lock an external second device 300, to achieve locking between the external first device 200 and the second device 300. The limiting member 30 is connected to the second locking member 20 through the elastic member 40. The first locking member 10 is slidable relative to the second locking member 20 along a first direction D1. The first locking member 10 and the second locking member 20 are locked through the limiting member 30.

For the first locking member 10, refer to FIG. 6. The first locking member 10 has a first locking slot 101 and a second locking slot 102 spaced apart along the first direction D1. The first locking slot 101 and the second locking slot 102 are both configured for arrangement of the limiting member 30. A spacing portion 103 is provided between the first locking slot 101 and the second locking slot 102. The spacing portion 103 has a first inclined surface 1031 facing the first locking slot 101 and a second inclined surface 1032 facing the second locking slot 102. The first inclined surface 1031 and the second inclined surface 1032 are configured to abut against the limiting member 30.

In addition, a sliding portion 104 is further arranged on the first locking member 10. The sliding portion 104 is configured to specifically slide relative to the second locking member 20 along the first direction D1, to achieve sliding of the first locking member 10 relative to the second locking member 20.

In addition, a stop portion 105 is further arranged on the first locking member 10. The stop portion 105 is configured to abut against an external first device 200, to limit movement of the second locking member 20.

In addition, in some implementations of embodiments of the present application, refer to FIG. 1. The first locking member 10 includes a first pushing portion 106 and a second pushing portion 107 arranged opposite to each other along the first direction D1. Both the first pushing portion 106 and the second pushing portion 107 are configured to facilitate a user to push the first locking member 10 to slide relative to the second locking member 20.

It may be understood that, the sliding portion 104 of the first locking member 10 can be connected to the first pushing portion 106, and can also be connected to the second pushing portion 107. Alternatively, the sliding portion 104 is connected between the first pushing portion 106 and the second pushing portion 107. Specifically, by pushing the first pushing portion 106 or the second pushing portion 107, the sliding of the first locking member 10 relative to the second locking member 20 is achieved through the sliding portion 104.

In embodiments of the present application, the first direction D1 is not a single pointing direction. The first direction D1 covers two vector directions which have opposite pointing directions. The two opposite directions jointly constitute a direction category represented by the first direction D1. In the accompanying drawings provided by the present application, only one of the pointing directions of the first direction D1 is exemplarily shown.

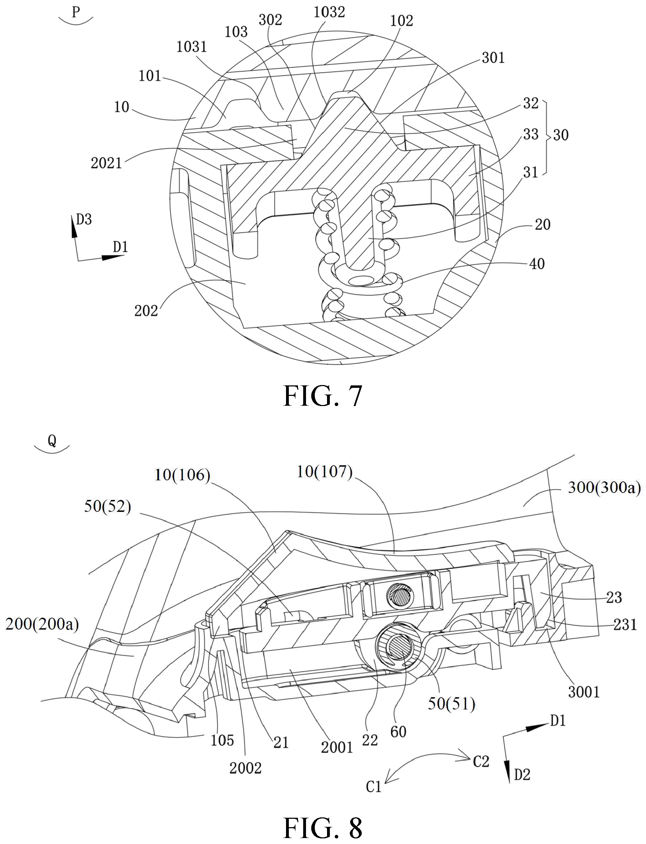

For the limiting member 30 and elastic member 40, refer to FIG. 7 and FIG. 8 together. One end of the elastic member 40 is connected to the second locking member 20 and an other end of the elastic member 40 is connected to the limiting member 30, to provide the limiting member 30 with an elastic force toward the first locking slot 101 or the second locking slot 102, thereby ensuring that the limiting member 30 can be stably clamped in the first locking slot 101 or the second locking slot 102. Specifically, when the limiting member 30 is limited in the second locking slot 102, by pushing the first pushing portion 106, the first locking member 10 slides relative to the second locking member 20 along one of the pointing directions of the first direction D1. The elastic member 40 undergoes elastic deformation. Under the action of the pushing force of the first locking member 10 and the elastic deformation of the elastic member 40, the limiting member 30 can disengage from the second locking slot 102, bypass the spacing portion 103 between the first locking slot 101 and the second locking slot 102, and then enter the first locking slot 101 and be limited by the first locking slot 101. Similarly, when the limiting member 30 is limited in the first locking slot 101, by pushing the second pushing portion 107, the first locking member 10 slides relative to the second locking member 20 along the other of the pointing directions of the first direction D1. The elastic member 40 undergoes elastic deformation. Under the action of the pushing force of the first locking member 10 and the elastic deformation of the elastic member 40, the limiting member 30 can disengage from the first locking slot 101, bypass the spacing portion 103 between the first locking slot 101 and the second locking slot 102, and then enter the second locking slot 102 and be limited by the second locking slot 102. Based on this manner, switching of the limiting member 30 between the first locking slot 101 and the second locking slot 102 is achieved.

In some embodiments, the elastic member 40 is a spring.

It should be noted that, refer to FIG. 8 and FIG. 7 together. When the limiting member 30 is located in the second locking slot 102, the stop portion 105 of the first locking member 10 is configured to abut against the first device 200. The movement of the first locking member 10 is limited through the stop portion 105. The second locking member 20 is limited to the first locking member 10 through the limiting member 30. The movement of the second locking member 20 is also limited. When the limiting member 30 is located in the first locking slot 101, the stop portion 105 of the first locking member 10 is not limited by the first device 200. Therefore, the first locking member 10 and the second locking member 20 are released from limiting.

The implementation solution in which the first locking member 10 abuts against the first device 200 to limit movement of the second locking member 20 and the implementation solution in which the first locking member 10 releases the second locking member 20 from limiting, may be described in detail again in the subsequent embodiments of an unmanned aerial vehicle (UAV).

It should be noted that, the manner in which the first locking member 10 locks the second locking member 20 is not limited to the above manner using the limiting member 30 and the elastic member 40. Another implementation solution is also possible, for example, the manner in which a locking member in CN220293392 U (corresponding to the first locking member 10 of the present application) locks a cover opening button (corresponding to the second locking member 20 of the present application).

In some implementations of the present application, refer to FIG. 7 and FIG. 6 together. The limiting member 30 has a third inclined surface 301 and a fourth inclined surface 302. When the limiting member 30 is located in the first locking slot 101, at least part of the third inclined surface 301 abuts against the first inclined surface 1031. When the limiting member 30 is located in the second locking slot 102, at least part of the fourth inclined surface 302 abuts against the second inclined surface 1032. Through the arrangement of the first inclined surface 1031, the second inclined surface 1032, the third inclined surface 301 and the fourth inclined surface 302, the smoothness of switching of the limiting member 30 between the first locking slot 101 and the second locking slot 102 is improved.

In some implementations of the present application, the limiting member 30 includes a connecting portion 31, a first limiting portion 32 and a second limiting portion 33. The connecting portion 31 is connected to an other end of the elastic member 40. The first limiting portion 32 is connected to the connecting portion 31. The first limiting portion 32 is configured to be limited in the first locking slot 101 or the second locking slot 102. The second limiting portion 33 is connected to the connecting portion 31 along the first direction D1. The second limiting portion 33 is configured to abut against the second locking member 20, to improve the structural stability of the entire limiting member 30 being connected to the second locking member 20 through the elastic member 40.

In some embodiments, two second limiting portions 33 are provided. The two second limiting portions 33 are oppositely connected to the connecting portion 31 along the first direction D1, to further improve the structural stability of the entire limiting member 30 being connected to the second locking member 20 through the elastic member 40.

For ease of clear description, a direction in which the first locking member 10 is superposed on the second locking member 20 is defined as a second direction D2. A third direction D3 is further defined. The first direction D1, the second direction D2 and the third direction D3 are perpendicular to each other two by two. In some embodiments, two limiting members 30 are provided. The two limiting members 30 are arranged at an interval along the third direction D3. Two elastic members 40 are provided. One end of one of the elastic members 40 is connected to the second locking member 20 and an other end of the one of the elastic members 40 is connected to one of the limiting members 30. Through arrangement of the two limiting members 30, stability and reliability of sliding of the first locking member 10 relative to the second locking member 20 are improved.

In addition, it may be understood that through arrangement of the elastic member 40, reliability of the limiting member 30 being limited in the first locking slot 101 or the second locking slot 102 along the third direction D3 is improved and reliability of locking of the first locking member 10 to the second locking member 20 is improved.

It may be understood that when two limiting members 30 are provided, two first locking slots 101 are provided. The two first locking slots 101 are provided along the third direction D3. One of the first locking slots 101 is configured to limit one of the limiting members 30. Two second locking slots 102 are provided. The two second locking slots 102 are provided along the third direction D3. One of the second locking slots 102 is configured to limit one of the limiting members 30.

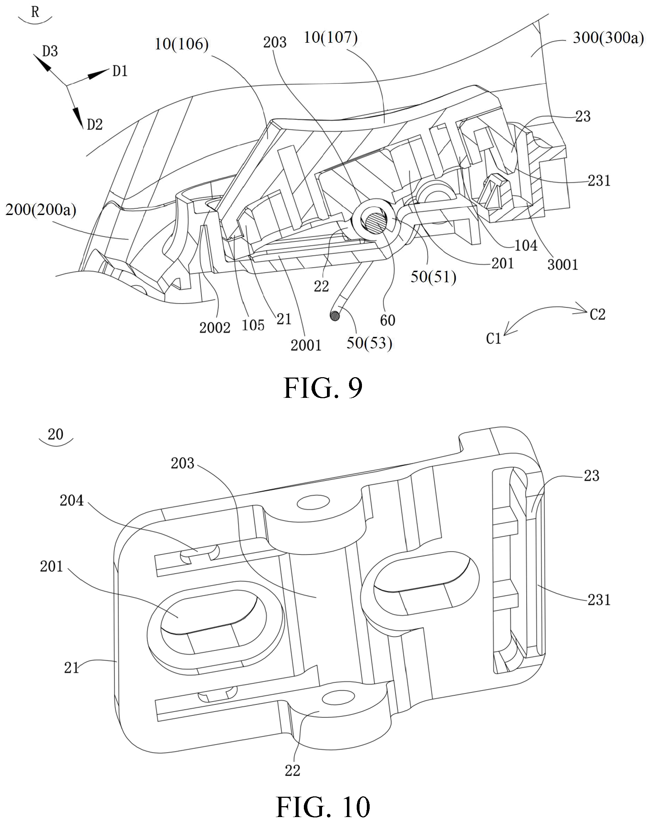

For the second locking member 20, the rotating shaft 60 and the torsion spring 50, refer to FIG. 9. The second locking member 20 is configured to be rotatably fitted to the external first device 200 through the rotating shaft 60. A spring body 51 of the torsion spring 50 is fitted to the rotating shaft 60, to achieve a rotational connection between the spring body 51 of the torsion spring 50 and the second locking member 20. An end portion 52 of the torsion spring 50 abuts against the second locking member 20. A torsion arm 53 of the torsion spring 50 is configured to abut against the first device 200.

In some implementations of the present application, the second locking member 20 is provided with a sliding hole 201. The sliding portion 104 of the first locking member 10 extends into the sliding hole 201. The sliding portion 104 is slidable relative to the sliding hole 201 along the first direction D1. Sliding of the first locking member 10 relative to the second locking member 20 is achieved through the sliding of the sliding portion 104 of the first locking member 10 relative to the sliding hole 201 of the second locking member 20.

In some embodiments, two sliding holes 201 are provided. The two sliding holes 201 are provided at an interval along the first direction D1. Two sliding portions 104 of the first locking member 10 are also provided. One of the sliding portions 104 extends into one of the sliding holes 201, to improve smoothness and reliability of sliding of the first locking member 10 relative to the second locking member 20.

In some embodiments, the second locking member 20 has a stopping portion 21. The stopping portion 21 is configured to limit a sliding distance of the first locking member 10 relative to the second locking member 20. For example, when the first locking member 10 is pushed to slide relative to the second locking member 20 along the first direction D1, the limiting member 30 switches from the second locking slot 102 to the first locking slot 101. The first locking member 10 is limited by the stopping portion 21 of the second locking member 20, so that the limiting member 30 cannot further disengage from the first locking slot 101 and continue moving.

In some implementations of the present application, the stop portion 105 of the first locking member 10 may be limited by the stopping portion 21 of the second locking member 20.

In some implementations of the present application, refer to FIG. 7. The second locking member 20 is provided with a fitting groove 202 and an opening 2021 in communication with the fitting groove 202. One end of the elastic member 40 is connected to a groove wall of the fitting groove 202. At least part of the limiting member 30 (for example, the connecting portion 31 of the limiting member 30, a part of the first limiting portion 32 and the second limiting portion 33) is received in the fitting groove 202. An end of the limiting member 30 facing away from the elastic member 40 extends from the opening 2021 and is limited in the first locking slot 101 or the second locking slot 102. Specifically, the first limiting portion 32 of the limiting member 30 extends from the opening 2021 and is limited in the first locking slot 101 or the second locking slot 102.

In some implementations of the present application, the limiting member 30 abuts against the groove wall of the fitting groove 202 along the first direction D1. Specifically, the second limiting portion 33 of the limiting member 30 abuts against the groove wall of the fitting groove 202, to improve the reliability of the limiting member 30 being connected to the second locking member 20 through the elastic member 40.

It can be understood that, when two limiting members 30 are provided, two fitting grooves 202 are provided. One of the limiting members 30 is connected to the groove wall of one of the fitting grooves 202 through the elastic member 40.

In some embodiments, refer to FIG. 9 and FIG. 5 together. The second locking member 20 has a mounting portion 22. The mounting portion 22 is configured to be rotatably connected to the first device 200. Specifically, the rotating shaft 60 extends through the mounting portion 22, which is rotatably connected to the first device 200 through the rotating shaft 60, to achieve that the second locking member 20 is fitted to the first device 200. The technical solution in which the second locking member 20 is fitted to the first device 200 may be described in detail in the subsequent embodiments of a UAV.

In some embodiments, refer to FIG. 8 and FIG. 9. The second locking member 20 has a latch portion 23. The latch portion 23 is configured to lock the second device 300. When the latch portion 23 is locked to the second device 300 and the mounting portion 22 rotates along a first rotation direction C1, the latch portion 23 disengages from the second device 300, so that the latch portion 23 can be unlocked from the second device 300. When the mounting portion 22 rotates along a second rotation direction C2 opposite to the first rotation direction C1, the latch portion 23 can be locked to the second device 300. Locking and unlocking between the second locking member 20 and the second device 300 are achieved through the latch portion 23 of the second locking member 20. Since the second locking member 20 is fitted to the first device 200, locking and unlocking of the first device 200 and the second device 300 are achieved through the second locking member 20.

The locking manner between the latch portion 23 and the second device 300 may be described in detail in the subsequent embodiments of a UAV.

In addition, refer to FIG. 7 to FIG. 9 together and refer to the foregoing description of locking and unlocking between the first locking member 10 and the second locking member 20. When the limiting member 30 is located in the second locking slot 102, the stop portion 105 of the first locking member 10 is configured to abut against the first device 200. The movement of the first locking member 10 is limited through the stop portion 105. The second locking member 20 is limited to the first locking member 10 through the limiting member 30. The movement of the second locking member 20 is also limited, that is, the second locking member 20 cannot rotate relative to the first device 200. When the limiting member 30 is located in the first locking slot 101, the stop portion 105 of the first locking member 10 is not limited by the first device 200. The first locking member 10 and the second locking member 20 are released from limiting. In other words, the second locking member 20 can rotate relative to the first device 200, so that the second locking member 20 can rotate along the second rotation direction C2 and be locked to the second device 300 through the latch portion 23. The second locking member 20 can also rotate along the first rotation direction C1 and disengage from the second device 300 through the latch portion 23, to achieve unlocking between the second locking member 20 and the second device 300. After the latch portion 23 is locked to the second device 300, single locking between the first device 200 and the second device 300 by the locking mechanism 100 is achieved. In the meantime, the first locking member 10 is pushed, to switch the limiting member 30 from the first locking slot 101 to the second locking slot 102. The first locking member 10 (specifically, can be the stop portion 105) abuts against the first device 200. The movement of the first locking member 10 is limited. The rotation of the second locking member 20 locked by the first locking member 10 is limited. In this way, double locking is achieved and the reliability of the locking mechanism 100 in locking the first device 200 and the second device 300 is improved.

It should be noted that, in some implementations of the present application, the second locking member 20 achieves locking between the first device 200 and the second device 300 through the latch portion 23. The manner in which the second locking member 20 locks the first device 200 and the second device 300 is not limited to the form of the latch portion 23. Another manner is also possible, for example, the locking manner in which the cover opening button in CN220293392 U (which can be regarded as the second locking member 20 of the present application) locks a flip cover (which can be regarded as the second device 300 of the present application).

In some embodiments, an inclined surface 231 is arranged on the latch portion 23, so that an area of a cross section of the latch portion 23 decreases along the second rotation direction C2, to facilitate the latch portion 23 to be locked to the second device 300 and facilitate the latch portion 23 to disengage from the second device 300.

The cross section of the latch portion 23 refers to a surface formed by cross cutting the latch portion 23 along the first direction D1 and the third direction D3.

In some embodiments, refer to FIG. 9 and FIG. 10. The second locking member 20 is recessed in a direction away from the rotating shaft 60 (along a radial direction of the rotating shaft 60) to form a receiving groove 203. The receiving groove 203 is configured to receive a part of the spring body 51 of the torsion spring 50. The design of the receiving groove 203 can effectively reduce friction and wear of the spring body 51 of the torsion spring 50 during operation. By receiving a part of the spring body 51 of the torsion spring 50 in the receiving groove 203, a contact area between the spring body 51 and surrounding components is reduced. Therefore, wear caused by friction is reduced, so that a service life of the torsion spring 50 is prolonged.

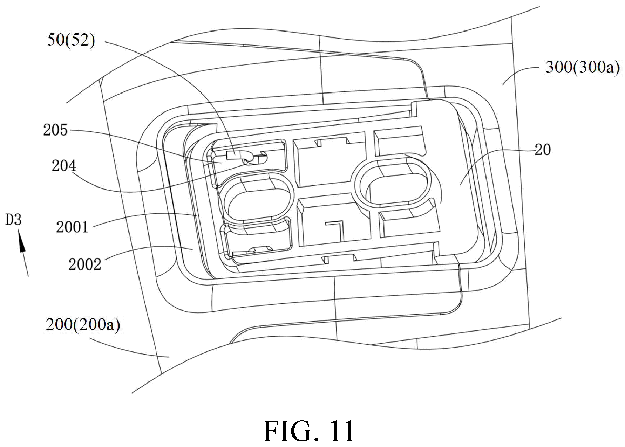

In some embodiments, refer to FIG. 11. The second locking member 20 is provided with a mounting hole 204. The end portion 52 of the torsion spring 50 extends through the mounting hole 204 and then abuts against the second locking member 20. Through the arrangement of the mounting hole 204, the reliability of the end portion 52 of the torsion spring 50 being arranged on the second locking member 20 is improved.

In some embodiments, the second locking member 20 is provided with an accommodating groove 205. The mounting hole 204 is located on a groove bottom of the accommodating groove 205. The end portion 52 of the torsion spring 50 extends through the mounting hole 204 and then abuts against the groove bottom of the accommodating groove 205. Through the arrangement of the accommodating groove 205, an accommodating space is provided for the end portion 52 of the torsion spring 50. Therefore, the risk of wear of the end portion 52 of the torsion spring 50 on surrounding components when the torsion spring rotates is reduced.

It should be noted that, in some embodiments, two end portions 52 of the torsion spring 50 are provided. The two end portions 52 of the torsion spring 50 are arranged at an interval. Two accommodating grooves 205 are provided. The two accommodating grooves 205 are provided at an interval along the third direction D3. Two mounting holes 204 are provided. The end portion 52 of one of the torsion springs 50 extends through one of the mounting holes 204 and then abuts against the groove bottom of one of the accommodating grooves 205, to improve the stability and reliability of the torsion spring 50 fitted to the second locking member 20.

In some implementations of the present application, refer to FIG. 6 and FIG. 7. The locking mechanism 100 includes a first locking member 10, a second locking member 20, a limiting member 30 and an elastic member 40. The first locking member 10 is provided with a first locking slot 101 and a second locking slot 102 spaced apart along the first direction D1. One end of the elastic member 40 is connected to the second locking member 20 and an other end of the elastic member 40 is connected to the limiting member 30. The limiting member 30 is configured to be limited in the first locking slot 101 or the second locking slot 102. The first locking member 10 is slidable relative to the second locking member 20 along the first direction D1, to switch the limiting member 30 between the first locking slot 101 and the second locking slot 102. The second locking member 20 is configured to be fitted to the first device 200 and lock the second device 300. When the limiting member 30 is located in the second locking slot 102, the first locking member 10 is configured to abut against the first device 200, to limit movement of the second locking member 20. When the limiting member 30 is located in the first locking slot 101, the first locking member 10 releases the movement of the second locking member 20 from limiting. By using the locking mechanism 100, single locking of the first device 200 and the second device 300 can be achieved through the second locking member 20 and limitation on the movement of the second locking member 20 and unlocking of the second locking member by the first locking member 10 can be achieved through the limiting member 30. Specifically, when the limiting member 30 is located in the second locking slot 102, the first locking member 10 is configured to abut against the first device 200, to limit movement of the second locking member 20. When the limiting member 30 is located in the first locking slot 101, the first locking member 10 partially disengages from the first device 200, so that the first locking member 10 releases the second locking member 20 from limiting. In this way, double locking can be achieved, a failure risk of the locking mechanism 100 can be reduced and reliability of locking of the first device 200 and the second device 300 by the locking mechanism 100 can be improved.

In some implementations of the present application, refer to FIG. 8 and FIG. 9. The locking mechanism 100 includes a first locking member 10 and a second locking member 20. The first locking member 10 is movably connected to the second locking member 20. The first locking member 10 is configured to abut against the first device 200, to limit movement of the second locking member 20. The second locking member 20 has a mounting portion 22. The mounting portion 22 is configured to be rotatably connected to the first device 200. The second locking member 20 has a latch portion 23. When the mounting portion 22 rotates along the first rotation direction C1, the latch portion 23 can be unlocked from the second device 300. When the mounting portion 22 rotates along the second rotation direction C2 opposite to the first rotation direction C1, the latch portion 23 can be locked to the second device 300. By using the locking mechanism 100, when the mounting portion 22 rotates along the first rotation direction C1, the latch portion 23 also rotates along the first rotation direction C1. The latch portion 23 can disengage from the second device 300, to achieve unlocking between the latch portion 23 and the second device 300. In other words, unlocking between the latch portion 23 and the second device 300 can be achieved without rotation of the second device 300. Similarly, when the mounting portion 22 rotates along the second rotation direction C2, the latch portion 23 can be limited to the second device 300, to achieve locking between the latch portion 23 and the second device 300. In other words, locking between the latch portion 23 and the second device 300 can be achieved without rotation of the second device 300.

In a specific application scenario, the first device 200 can be a battery pack 200a. The second device 300 can be a housing 300a of a UAV.

Embodiments of the present application further provide an embodiment of a UAV. As shown in FIG. 3 or FIG. 4, the UAV includes a battery pack 200a, a housing 300a and a locking mechanism 100. For a specific structure and function of the locking mechanism 100, refer to the foregoing embodiments. Details are not described herein again. A second locking member 20 of the locking mechanism 100 is fitted to the battery pack 200a. The second locking member 20 is configured to lock a second device 300, to achieve the single locking. The first locking member 10 is configured to abut against the battery pack 200a, to limit movement of the second locking member 20 and achieve the double locking.

In some embodiments, refer to FIG. 8 and FIG. 9. A mounting portion 22 of the second locking member 20 is rotatably connected to the battery pack 200a. Specifically, the battery pack 200a is provided with a mounting groove 2001. The mounting portion 22 is received in the mounting groove 2001. The mounting portion 22 is rotatably connected to a groove wall of the mounting groove 2001, so that the mounting portion 22 of the second locking member 20 can rotate relative to the battery pack 200a.

In some embodiments, the battery pack 200a is further provided with a step portion 2002 connected to the mounting groove 2001. Specifically, the step portion 2002 is configured to abut against a stop portion 105 of the first locking member 10, to limit movement of the first locking member 10 and the second locking member 20.

In some embodiments, a latch portion 23 of the second locking member 20 is configured to lock the second device 300. Specifically, the housing 300a of the UAV is provided with a locking slot 3001. When the latch portion 23 rotates along a second rotation direction C2, the latch portion 23 is received in the locking slot 3001, to limit linear movement of the housing 300a and implement locking of the housing 300a.

An operating principle of the locking mechanism 100 locking the battery pack 200a and the housing 300a of the UAV is that the battery pack 200a fitted with the locking mechanism 100 moves toward the housing 300a, the locking mechanism 100 is pressed, the mounting portion 22 of the second locking member 20 rotates and the entire locking mechanism 100 rotates along the second rotation direction C2 until the latch portion 23 of the second locking member 20 is limited in the locking slot 3001 of the housing 300a, thereby achieving single locking. In this case, the first locking member 10 is pushed to slide along a first direction D1. The limiting member 30 switches from the first locking slot 101 to the second locking slot 102. The stop portion 105 of the first locking member 10 abuts against the step portion 2002 of the battery pack 200a. The step portion 2002 limits the first locking member 10 and the second locking member 20. Even if the first locking member 10 and the second locking member 20 are pressed, the first locking member 10 and the second locking member 20 cannot rotate along the first rotation direction C1 and the latch portion 23 of the second locking member 20 cannot disengage from the locking slot 3001 of the housing 300a, thereby achieving double locking.

When unlocking is required, the first locking member 10 is pushed, the limiting member 30 switches from the first locking slot 101 to the second locking slot 102 and the stop portion 105 of the first locking member 10 disengages from the step portion 2002 of the battery pack 200a. The first locking member 10 is pressed, the mounting portion 22 of the second locking member 20 rotates and the entire locking mechanism 100 rotates along the first rotation direction C1. The latch portion 23 of the second locking member 20 disengages from the locking slot 3001 of the housing 300a, to implement unlocking between the battery pack 200a and the housing 300a. In this case, the battery pack 200a can be separated from the housing 300a of the UAV.

It should be noted that, the specification of the present application and the accompanying drawings thereof illustrate preferred embodiments of the present application. However, the present application may be implemented in various different forms, and is not limited to embodiments described in this specification. These embodiments are not intended to be an additional limitation on the content of the present application, and are provided for the purpose of providing a more thorough and comprehensive understanding of the content disclosed in the present application. In addition, the foregoing technical features are further combined to form various embodiments not listed above, which shall be construed as falling within the scope of the present application. Further, a person of ordinary skill in the art may make improvements or modifications based on the above descriptions. All of the improvements and modifications shall fall within the protection scope of the appended claims of the present application.

## Claims

1. A locking mechanism, comprising: a first locking member, a second locking member, a limiting member and an elastic member, wherein
the first locking member is provided with a first locking slot and a second locking slot spaced apart along a first direction;
one end of the elastic member is connected to the second locking member, an other end of the elastic member is connected to the limiting member and the limiting member is configured to be limited in the first locking slot or the second locking slot;
the first locking member is slidable relative to the second locking member along the first direction, to switch the limiting member between the first locking slot and the second locking slot;
the second locking member is configured to be fitted to a first device and lock a second device;
when the limiting member is located in the second locking slot, the first locking member is configured to abut against the first device, to limit movement of the second locking member; and
when the limiting member is located in the first locking slot, the first locking member releases the second locking member from limiting.

2. The locking mechanism according to claim 1, wherein a spacing portion is provided between the first locking slot and the second locking slot, the spacing portion having a first inclined surface facing the first locking slot and a second inclined surface facing the second locking slot; and the limiting member has a third inclined surface and a fourth inclined surface, at least part of the third inclined surface abutting against the first inclined surface when the limiting member is located in the first locking slot and at least part of the fourth inclined surface abutting against the second inclined surface when the limiting member is located in the second locking slot.

3. The locking mechanism according to claim 1, wherein the second locking member is provided with a sliding hole and the first locking member has a sliding portion extending into the sliding hole, the sliding portion being slidable relative to the sliding hole along the first direction.

4. The locking mechanism according to claim 1, wherein the second locking member is provided with a fitting groove and an opening in communication with the fitting groove, the one end of the elastic member is connected to a groove wall of the fitting groove, at least part of the limiting member is received in the fitting groove and an end of the limiting member facing away from the elastic member is configured to extend from the opening to be limited in the first locking slot or the second locking slot.

5. The locking mechanism according to claim 4, wherein the limiting member abuts against the groove wall of the fitting groove along the first direction.

6. The locking mechanism according to claim 5, wherein the limiting member comprises a connecting portion, a first limiting portion and a second limiting portion, the connecting portion being connected to the other end of the elastic member, the first limiting portion being connected to the connecting portion, the first limiting portion being configured to extend from the opening to be limited in the first locking slot or the second locking slot, the second limiting portion being connected to the connecting portion along the first direction and the second limiting portion abutting against the groove wall of the fitting groove.

7. The locking mechanism according to any of claims 1 to 6, wherein the first locking member comprises a first pushing portion and a second pushing portion arranged opposite to each other along the first direction, the first pushing portion being configured to switch the limiting member from the second locking slot to the first locking slot and the second pushing portion being configured to switch the limiting member from the first locking slot to the second locking slot.

8. The locking mechanism according to any of claims 1 to 6, wherein the first locking member has a stop portion, the stop portion being configured to abut against the first device, to limit the movement of the second locking member.

9. The locking mechanism according to any of claims 1 to 6, wherein the first locking member is superposed on the second locking member along a second direction, two limiting members are provided, the two limiting members are arranged at an interval along a third direction, the first direction, the second direction and the third direction are perpendicular to each other two by two, two elastic members are provided, one end of one of the elastic members is connected to the second locking member and an other end of the one of the elastic members is connected to one of the limiting members.

10. An unmanned aerial vehicle (UAV), comprising a battery pack, a housing and the locking mechanism according to any of claims 1 to 9, wherein the second locking member is fitted to the battery pack, the second locking member is configured to lock the second device and the first locking member is configured to abut against the battery pack.
